# EUROPÄISCHE PATENTSCHRIFT

(11) **EP 3 586 273 B1**
(45) Veröffentlichungstag und Bekanntmachung des Hinweises auf die Patenterteilung: **03.03.2021**
(21) Anmeldenummer: 18702239.7
(22) Anmeldetag: 26.01.2018
(51) Int. Cl.: G06K 19/07

(54) **TRANSPONDER MIT FÜR ANALOG-DIGITALEN MISCHBETRIEB OPTIMIERTEN HOCHFREQUENZDEMODULATOR**
TRANSPONDER WITH RADIO-FREQUENCY DEMODULATOR OPTIMIZED FOR ANALOGUE/DIGITAL HYBRID OPERATION
TRANSPONDEUR À DÉMODULATEUR À HAUTE FRÉQUENCE OPTIMISÉ POUR LE FONCTIONNEMENT MIXTE ANALOGIQUE-NUMÉRIQUE

(30) Priorität: 26.02.2017 DE 102017103974
(43) Veröffentlichungstag der Anmeldung: 01.01.2020
(73) Patentinhaber: IQ-Mobil GmbH, 82438 Eschenlohe (DE)
(72) Erfinder: BARTELS, Oliver, 80935 München (DE)
(74) Vertreter: Weickmann & Weickmann PartmbB
(86) Internationale Anmeldenummer: PCT/EP2018/051981
(87) Internationale Veröffentlichungsnummer: WO 2018/153616

(56) Entgegenhaltungen:
- WO-A1-2015/101695
- DE-C1- 19 702 768
- US-A1- 2013 099 897

## Beschreibung

Der Erfindung liegt die Aufgabe zugrunde, Messwerte und Identifikationsdaten aus einem Transponder auszulesen, der seinerseits über keine interne Energiequelle verfügt, sondern aus dem Funkfeld gespeist wird. Die Energie- und Datenübertragung soll hierbei im UHF- oder Mikrowellenbereich erfolgen, um die Antennen klein zu halten.

Zum Zweck der analogen Messwertübertragung ohne eigene Energiequelle bedient sich die Erfindung dem Prinzip der mikrowellengespeisten Quarzsensorik gemäß dem Patent DE19702768C1 desselben Erfinders, welche eine rein analoge Messwertübertragung im Mikrowellenbereich unter Verwendung im Basisband nachschwingender Messwertgeber ermöglicht.

Die dort beschriebenen Transponder mit Quarzsensoren werden inzwischen als Industriestandard u.a. in der Pharmaindustrie eingesetzt, um die Temperatur in bestimmten Verarbeitungsschritten zu bestimmen und zu regeln. In diesem Industriezweig ist es sehr wichtig, dass die mobilen Transponder nicht über eine interne Batterie versorgt werden, einerseits, weil die Gefahr des Austretens gefährlicher chemischer Stoffe aus der Batterie und die Verunreinigung der herzustellenden Medikamente besteht, andererseits, weil die verwendeten Temperaturbereiche außerhalb der Spezifikation herkömmlicher Batterien liegen.

Grundsätzlich verläuft die drahtlose Übertragung eines Messwerts gemäß DE19702768C1 wie folgt: Im Transponder befindet sich ein Messquarz, dessen Schwingfrequenz durch die zu messende Größe beeinflusst wird. Dies kann z.B. direkt die Temperatur durch Einwirkung auf einen geeignet geschnittenen Temperaturmessquarz sein, ebenso ist ein Ziehen eines gewöhnlichen Quarzes mit einem kapazitiven Sensor möglich.

Auch aus den Druckschriften DE 10 2007049560 A1 sowie DE 10 2010 028991 A1 sind Transponder mit Gleichrichtern bekannt.

Der Messquarz ist einerseits an einen Diodendemodulator gekoppelt, welcher aus einem amplitudenmodulierten Signal ohne eigene Energieversorgung das Modulationssignal durch Gleichrichtung gewinnt, andererseits an einen Mischer, bei dem es sich um dieselbe Gleichrichterdiode oder beispielsweise um einen MESFET handeln kann, der ebenfalls ohne eigene Energieversorgung durch Spannungsschwankungen an seinem Gate seine Impedanz ändert.

Zunächst wird vom Abfragegerät ein amplitudenmoduliertes Mikrowellensignal mit einer Modulationsfrequenz in der Nähe der Resonanzfrequenz des Schwingquarzes an den Transponder gesendet. Dieses Signal wird im Transponder gleichgerichtet und regt jetzt den Schwingquarz zum Schwingen an.

In einem zweiten Schritt wird nach einiger Zeit die Modulation abgeschaltet und nur noch der Mikrowellenträger ausgesendet. Der Schwingquarz schwingt jetzt aufgrund seiner hohen Güte auf seiner Eigenfrequenz, welche durch den zu messenden Wert beeinflusst wird, eine erhebliche Zeit nach. Diese Nachschwingungen können am Quarz abgeleitet und dem Mischer zugeführt werden, im einfachsten Fall durch den selben Strompfad, mit dem zunächst der Quarz zum Schwingen angeregt wurde.

Die Nachschwingungen ändern jetzt periodisch die Impedanz der Demodulatordiode oder des Mischer-FETs, was bei Beaufschlagung mit dem Mikrowellenträger zum Entstehen zweier Seitenbänder im Mikrowellenbereich führt. Diese können jetzt vom Abfragegerät empfangen und bezüglich ihrer Frequenz ausgewertet werden, wodurch die Schwingfrequenz des Quarzes im fernen Abfragegerät ermittelt und aus dieser der zu übertragende Messwert errechnet wird.

Eine solche Rückmodulation wird in der Fachsprache als Backscatter-Modulation bezeichnet, aus Sicht des Abfragegeräts entspricht der Transponder einem Radarziel, das bedingt durch die Änderung der Impedanz an der Transponderantenne periodisch mehr oder weniger reflektiert. Für weitere Details wird auf DE19702768C1 und die einschlägige Literatur verwiesen.

Bei der Nutzung in der Pharmaindustrie besteht der Wunsch, die Temperatur im selben Funkfeld an möglichst vielen unterschiedlichen Stellen im Herstellungsprozess getrennt messen zu können, um gerade bei temperaturkritischen Prozessen eine optimale Prozessführung und Ausbeute zu erhalten.

Bisher wird die Trennung der Messwerte durch die Wahl unterschiedlicher Frequenzen für die Temperaturmessquarze im Sinne einer klassischen Kanaleinteilung der Modulationsfrequenz durchgeführt.

Nachteilig ist dabei die begrenzte Anzahl an Frequenzen, da die Temperaturmessquarze einerseits aus technologischen Gründen nur in einem stark begrenzten Frequenzbereich mit vergleichbaren Kennlinien gefertigt werden können und andererseits auch die Demodulatorschaltung an den ungefähren Modulationsfrequenzbereich angepasst werden muss. Dem gegenüber steht der für größere Temperaturänderungen benötigte Modulationsfrequenzbereich für eine eindeutige Übertragung des Messwerts ohne Überschneidungen mit anderen Transpondern.

Als besondere Schwierigkeit kommt hinzu, dass die Temperaturmessquarze zur temperaturabhängigen Bereitstellung von Nebenresonanzfrequenzen neigen, welche in benachbarten Modulationsfrequenzbereichen zu Störungen Ruhren. Dies schränkt die Anzahl der parallel nutzbaren Transponder weiter ein.

Hinzu kommt, dass vom den Kunden vermehrt die Bereitstellung einer eindeutigen digitalen Identifikation des jeweiligen Transponders mit großer Codelänge aus Qualitätssicherungsgründen verlangt wird. Dies ist mit einer reinen Trennung der Modulationsfrequenzen nicht zu bewerkstelligen.

Man könnte jetzt meinen, dass mit der Verfügbarkeit von Halbleitern in Niedervoltprozessen das Prinzip der Quarzsensorik mit nachschwingendem Messwertgeber überholt sei. Dem ist jedoch nicht so, weil es 'aus technologischen Gründen zwar recht einfach möglich ist, eine digitale Kennung zu verarbeiten, der nötige Analog-Digitalwandler zur Messwerterfassung und eventuelle Oszillatoren hierzu aber weiterhin einen erheblichen Spannungs- und Strombedarf haben und zudem deren Genauigkeit bei schwankender Stromversorgung - wie hier infolge unterschiedlicher Funkausbreitungsbedingungen gegeben - erheblich leidet.

Die Aufgabe, die dieser Erfindung zugrunde liegt, besteht daher darin, die Verarbeitung einer digitalen Kennung in einem Transpondern mit einem analogen nachschwingenden Messwertgeber zu kombinieren, letzteren nur bei Empfang der richtigen Kennung freizuschalten und weiterhin den Leistungsfluss bei sehr geringen Empfangsleistungen so zu lenken, dass jeweils nur jene Baugruppen im Transponder versorgt werden, welche die jeweilige Leistung auch zu diesem Zeitpunkt benötigen.

Gleichzeitig wird ein Demodulator für die Mikrowellensignale benötigt, der den technischen Anforderungen eines nachschwingenden Messwertgebers genügt und eine möglichst hohe Ausgangsspannung für den digitalen Schaltungsteil bereitstellt.

Dies ist nach dem Stand der Technik nicht ohne weiteres möglich, da alle Hochfrequenzumschalter ebenso wie niederfrequente Schalter für die Modulationsfrequenz ihrerseits wieder eine eigene Speisung benötigen.

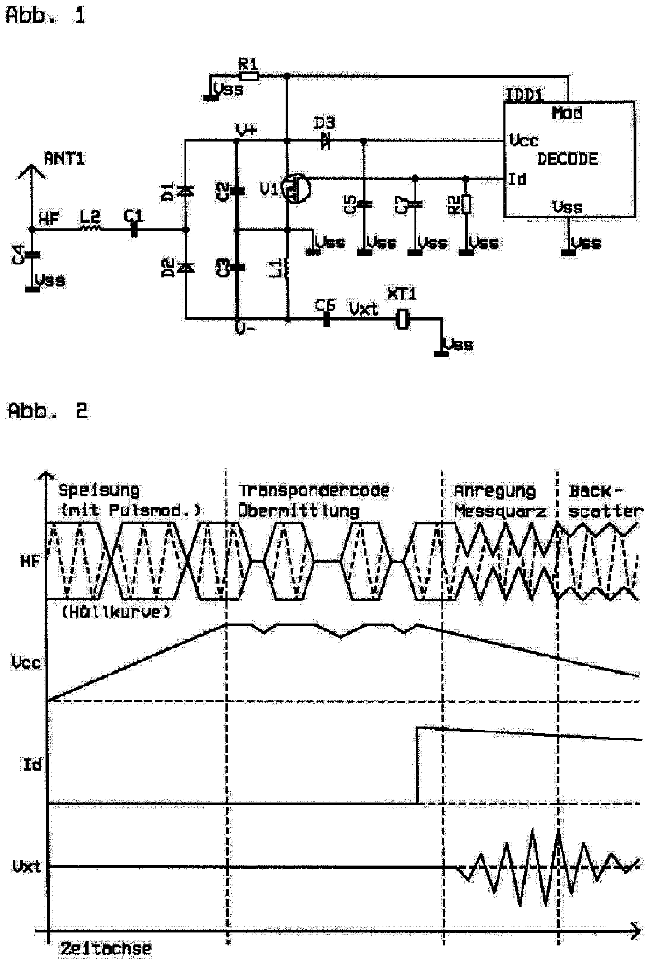

Das Problem wird erfindungsgemäß durch den im Hauptanspruch beschriebenen Transponder mit neuartigem Demodulator gelöst, dessen Funktion im Folgenden anhand eines Ausführungsbeispiels erläutert wird:
Das Beispiel in Abbildung 1 zeigt einen erfindungsgemäßen Transponder, Abbildung 2 dazu wesentliche Signale der Schaltung aus Abbildung 1 im zeitlichen Ablauf. Zunächst sei der grundlegende Aufbau beschrieben:
Im Beispiel ist die Empfangsantenne ANT1 über die entsprechend einer bevorzugten Ausführungsform der Erfindung gemäß Unteranspruch genutzten Bauteile C4 und L2 zur Impedanzanpassung mit dem Zweiwegegleichrichter bestehend aus den beiden Dioden D1 und D2 sowie bevorzugt gemäß Unteranspruch dem Kondensator C1 verbunden. Letzterer ist bei Vorschaltung einer Impedanzanpassung oder Antenne mit gleichspannungsmäßiger Verbindung nach Masse für die Abtrennung des Gleichanteils und für eine Spannungsverdopplung von entscheidender Bedeutung. Weiterhin bilden L2 und C1 einen Serienschwingkreis, der unerwünschte Störsignale fernhalten kann. Beide Ausgänge des Zweiwegegleichrichters sind gemäß dem Stand der Technik mit Glättungskondensatoren C2 und C3 abgeschlossen.

Während der eine Ausgang V+ des Zweiwegegleichrichters hinter D1 mit im Beispiel positiver Ausgangsspannung über eine weitere Entkopplungsschaltung bestehend aus D3 und C5 die aktive digitale Elektronik, hier einen Identifikationscodedetektor IDD1 mit der Versorgungsspannung Vcc versorgt, ist der andere Ausgang V- mit negativer Ausgangsspannung über die Induktivität L1 nach Masse (Vss) abgeschlossen.

Bei den Dioden D1 bis D3 sollte es sich gemäß Unteranspruch möglichst um Zero Bias Dioden oder geeignet geschaltete CMOS Transistoren handeln, welche bereits bei geringen Spannungen leitfähig werden. Denkbar wäre auch der Einsatz von Germaniumdioden, allerdings sprechen hier Kostengesichtspunkte gegen diese inzwischen exotischen Bauelemente.

Zusätzlich kann der Ausgang, welcher die aktive Elektronik IDD1 versorgt, über ein Schaltelement VI kurzgeschlossen werden. In einer bevorzugten Ausführung der Erfindung gemäß Unteranspruch handelt es sich dabei um einen MOSFET. Dessen Gate ist zudem mit dem Kondensator C7 gepuffert, der sich über den Widerstand R2 nur langsam entlädt, das Gate selber ist hochohmig.

Somit kann der Identifikationscodedetektor IDD1 den MOSFET VI ansteuern, was zwar dazu führt, dass sich der Identifikationscodedetektor selber seiner eigenen Betriebsspannung beraubt, dies aber bedingt durch die Entkopplung dieser durch D3 und C5 erst nach kurz Zeit geschieht, nachdem der Kondensator C7 am Gate des MOSFET bereits aufgeladen wurde. Danach hält der MOSFET VI den Kurzschluss für einen - sich aus der Zeitkonstante bestehend aus C7 und R2 ergebenden - wohldefinierten Zeitraum aufrecht.

Im Zusammenhang mit einem geeigneten Schema zur Anregung ergibt sich jetzt überraschenderweise ein ungewöhnliches Verhalten des Zweiwegegleichrichters, welches in einer neuartigen Art und Weise für die Zwecke dieses Transponders genutzt wird:
Zunächst wird der Zweiwegegleichrichter mit einem stehenden Hochfrequenzsignal - Mikrowellenträger - HF versorgt. Da der Ausgang V- mit einer Induktivität gleichspannungsmäßig abgeschlossen ist, ergibt sich einerseits das Bild eines klassischen Spannungsverdopplers, der so funktioniert, dass der Kondensator C1 zunächst bei einer negativen Halbwelle des Hochfrequenzsignals aufgeladen wird, wenn eigentlich die negative Spannung V- erzeugt werden soll, diese aber durch L I kurzgeschlossen ist.

Mit der positiven Halbwelle addiert sich jetzt die Spannung an C1 zu dieser und erzeugt am Glättungskondensator C2 die annähernd doppelte Spannung bezogen auf die Spitzenspannung der Halbwelle.

In einer besonders bevorzugten Form der Erfindung gemäß Unteranspruch kann jetzt zusätzlich ausgenutzt werden, dass hierbei ein Strom durch die Induktivität L1 fließt, welcher im Magnetfeld Energie speichert. Unterbricht man jetzt kurzfristig die Hochfrequenzversorgung, so strebt diese Induktivität durch Selbstinduktion danach, den durch sie fließenden Strom aufrecht zu erhalten.

Dies führt mit der Umkehr von der Stromsenke L1 zur jetzt Stromquelle auch zu einem Wechsel der Polarität der Spannung an L1, es entsteht dabei eine verhältnismäßig hohe Induktionsspannung, welche über D2 und D1 geleitet jetzt am Glättungskondensator C2 eine besonders hohe Ausgangsspannung bereitstellt. Das Prinzip des externen Takts entspricht dem Patent US6664770B1 bzw. EP1236170B1 desselben Erfinders, nur eben mit einer im Demodulator integrierten Wandlerinduktivität.

In Abbildung 2 entspricht dies dem Abschnitt Speisung. Am Ende dieses Abschnitts sollte der Kondensator C5 soweit geladen sein, dass ein regulärer Betrieb der aktiven digitalen Elektronik ermöglicht wird.

Im Abschnitt Transpondercode-Übermittlung wird jetzt durch weitere Einbrüche der Hochfrequenz, beispielsweise durch Pulslängencodierung nach dem Stand der Technik, ein Transpondercode übermittelt. Beispielsweise kann eine kurze Unterbrechung ein 0-Bit repräsentieren, eine lange Unterbrechung hingegen ein 1-Bit. Mit 16 Unterbrechungen können somit 2 hoch 16 Transponder adressiert werden, weitere Unterbrechungen können zur Übermittlung eines Übertragungsfehler erkennenden oder korrigierenden Codes genutzt werden.

Dazu ermöglicht es die Entkopplung der Versorgungsspannung Vcc vom Ausgang des Zweiwegegleichrichters, dass der Codedetektor IDD1 über seinen Eingang Mod kurze Unterbrechungen der Speisung erkennt und als Identifikationscode auswerten kann. Der Widerstand R1 sorgt dafür, dass der Einbruch erkennbar wird, indem er einen Spannungsabbau am Siebkondensator C2 beschleunigt. Der Widerstand darf hingegen nicht so klein sein, dass eine nennenswerte Leistung an ihm abfällt und die Versorgung der aktiven Elektronik beeinträchtigt wird.

Daraus ergeben sich Zeitanforderungen an die Dauer der Unterbrechung bedingt aus der Zeitkonstante, allerdings kann die Erkennung einer Unterbrechung beschleunigt werden, indem beispielsweise gemäß dem Stand der Technik die Versorgungsspannung Vcc als Referenz genutzt wird. Hierzu kann z.B. der Emitter eines Transistors oder der Sourceanschluss eines FET mit Vcc verbunden werden, während der Eingang Mod auf die Basis oder das Gate geführt wird.

Am Ende dieses Abschnitts hat der Identifikationscodedetektor IDD1 festgestellt, ob der Code genau diesem Transponder zugeordnet ist oder nicht. Falls nicht, so bleibt der Identifikationscodedetektor einfach inaktiv.

Im Fall der richtigen Zuordnung hingegen wird der Identifikationscodedetektor IDD1 hingegen jetzt den Ausgang Id auf die Spannung Vcc anheben, siehe Abbildung 2. Dieser Ausgang wird vorzugsweise als Open Drain, jedoch nicht gegen Masse, sondern gegen Vcc realisiert, um eine unerwünschte Entladung des Kondensators C7 nach dem Ausfall der Versorgungsspannung zu vermeiden. Wie bereits beschrieben wird hierdurch der Ausgang des Zweiwegegleichrichters V+ kurzgeschlossen.

Im nächsten Abschnitt folgt jetzt die Anregung des Messquarzes gemäß Patent DE19702768C1 mit einer Amplitudenmodulation des hochfrequenten Trägers. Und hierbei ergibt sich jetzt überraschenderweise, dass nur bei jenem Transponder, dessen Ausgang V+ kurzgeschlossen ist, eine solche Anregung erfolgt. Denn nur bei jenem Transponder wird jetzt ein großer Stromfluss durch die Induktivität L1 erzwungen, der Zweiwegegleichrichter wechselt vom primär spannungserzeugenden in den primär stromerzeugenden Betrieb. Damit ist dieser Transponder zur analogen Messung aktiviert, am Ausgang V- ist jetzt die Modulationsfrequenz sichtbar.

Bei den anderen Transpondern ohne aktivem VI verläuft sich die Amplitudenmodulation zur Anregung hingegen mangels signifikanten Stromfluss durch C2, C5 und IDD1 und führt eben nicht zur Ausgabe einer signifikanten Modulationsfrequenz an V-. Dieses Verhalten wird zudem durch die Nichtlinearität der Dioden begünstigt.

Bei dem Demodulator mit kurzgeschlossenen Ausgang V+ ist hingegen die Modulationsfrequenz an V- mit großer Amplitude messbar. Diese wird bei einer bevorzugten Ausführung gemäß Unteranspruch noch dadurch verstärkt, dass die Induktivität LI zusammen mit dem Glättungskondensator C3 einen Schwingkreis bildet, welcher ungefähr auf die Modulationsfrequenz abgestimmt ist. Damit kommt es mit fallender Amplitude sogar zu einer Spannungsumkehr an V-, d.h. einer kurzfristig positiven Ausgangsspannung.

Gleichzeitig wird die mittels Hochfrequenz empfangene Leistung optimal ausgeschöpft, weil durch die Stromansteuerung der Induktivität keine Leistung resistiv vernichtet werden muss, um die fallende Hochfrequenz-Amplitude in Phasen niedriger Hochfrequenz-Leistung der Amplitudenmodulation in eine sinkende Spannung V- zu verwandeln, dies erledigt die Induktivität L1.

Die so bereitgestellte Modulationsfrequenz kann jetzt gemäß DE19702768C1 über den Kondensator C6 den Messquarz XT1 zum Schwingen anregen. Die Schwingung baut sich aufgrund der schwachen Kopplung über C6 langsam auf, siehe das Signal Vxt in Abbildung 2. Ist in dem Messquarz XT1 genügend Schwingungsenergie gespeichert, dann endet von der Zeitsteuerung des Abfragegeräts dieser Abschnitt.

Im letzten Abschnitt wird dann vorn Abfragegerät lediglich ein Dauerträger ausgestrahlt. In der hier gezeigten bevorzugten Ausführung der Erfindung gemäß Unteranspruch wird jetzt die Eigenfrequenz des Messquarzes XT1, welche dem zu messenden Wert entspricht, rückwärts über den Kondensator C6 auf die Gleichrichterdiode D2 übertragen. In dieser erfolgt jetzt durch Mischung mit dem Hochfrequenzsignal eine Amplitudenmodulation des Hochfrequenzsignals, welche in einem Backscatter von zwei AM Seitenbändern an der Antenne ANTI gemäß DE19702768C1 abgestrahlt wird, welcher wiederum von dem Abfragegerät gemessen werden kann. Aus dem Abstand der Seitenbänder zum Träger ergibt sich dann wiederum die zu bestimmende Eigenfrequenz des Messquarzes XT1 und somit der zu messende Wert. Natürlich kann die Backscatter-Modulation auch mittels eines separaten Elements, z.B. eines MESFET mit Gate gekoppelt an das Signal Vxt, bewirkt werden.

Einige Zeit nach Abfrage des Messwerts ist dann der Kondensator C7 über den Widerstand R2 entladen, der Kurzschluss von V+ durch den MOSFET V1 wird somit aufgehoben und der Transponder kann erneut abgefragt werden.

Eine zusätzliche Erhöhung der Ausgangsspannung ist in bestimmten Fällen durch den zusätzlichen Einsatz einer Gleichrichterkaskade denkbar, allerdings benötigt diese weitere HF Leistung durch den unvermeidbaren realen Innenwiderstand der Dioden. In diesem Innenwiderstand wird leider die Hochfrequenz-Leistung in Wärme umgesetzt, denn eine perfekte Diode ohne externe Speisung ist gemäß dem zweiten Hauptsatz der Thermodynamik nicht möglich. Andernfalls könnte eine solche Diode das thermische Hintergrundrauschen in nutzbare elektrische Energie verwandeln, womit der zweite Hauptsatz verletzt wäre. Hier gilt es abzuwägen, ob speziell bei geringen Eingangsleistungen nicht die Impedanzanpassung und die Verwendung von genau zwei Gleichrichterdioden effizienter ist.

Sofern für den Backscatter ein z.B. ein separater MESFET anstelle der Rückmischung über eine vorhandene Gleichrichterdiode eingesetzt wird, so könnte dieser zusätzlich direkt vom Digitalteil gemäß dem Stand der Technik genutzt werden, um eine Information abseits der analogen Messung, z.B. über die reine Erkennung des Identifikationscodes, zum Abfragegerät zurück zu übertragen. Prinzipiell eignet sich für diesen Zweck auch der zum Kurzschließen der V+ verwendete MOSFET, da der Kurzschluss ebenfalls zu einer an der Antenne wahrnehmbaren Impedanzänderung führt. Allerdings ist dabei zu bedenken, dass hier gerade das Gate mit einem Kondensator zusätzlich kapazitiv beladen wurde, um die Zeitkonstante für die analoge Abfrage zu realisieren, hier wird es sinnvoller sein, auf einen weiteren MOSFET oder MESFET zurückzugreifen.

Denkbar wäre auch, für die unterschiedlichen Abschnitte der Anregung und Abfrage unterschiedliche Frequenzen zu benutzen, z.B. den Identifikationsvorgang im 868 MHz SRD Band und die analoge Messwertübertragung im 2,45 GHz ISM Band vorzunehmen. Zwar bedingt dies einen höheren Aufwand bei der Entwicklung der Anpassung der Antenne und des Demodulators für zwei Frequenzbänder, andererseits kann so die im schmalbandigen SRD Band erlaubte höhere Sendeleistung für eine sichere schmalbandige digitale Abfrage genutzt werden. Trotz der dann denkbaren Trennung der Modi durch frequenzselektive Filter bleibt der Vorteil dieser Erfindung erhalten, da derartige Filter bei kleinem Aufbau, wie hier gefordert, meist keine hohe Trennschärfe aufweisen.

Eine weitere schaltungstechnische Option besteht darin, statt einer Reihenschaltung der Dioden D1 und D3 im Ausführungsbeispiel eine Parallelschaltung vorzunehmen und so das Schaltelement von der Speisung der Elektronik zu entkoppeln. In diesem Fall würde der Demodulator über drei Ausgänge verfügen, zwei mit gleicher Stromrichtung jeweils für das Schaltelement und die digitale Elektronik, einem weiteren mit entgegengesetzter Stromrichtung zur Versorgung des nachschwingenden Messwertgebers. Allerdings gilt auch hier wieder das Vorgesagte zum Innenwiderstand der Dioden.

Gemäß Unteranspruch wird ein kommerzielles Produkt wesentliche Teile dieser Schaltung auf einem monolithischen integrierten Schaltkreis integrieren, um den Transponder zu miniaturisieren und kostengünstig fertigen zu können.

Die vorliegende Erfindung ermöglicht im Bereich funkfeldgespeister Transponder zur Übertragung von Messwerten erstmals die Kombination einer digitalen Baugruppe zur Identifikation mit dem analogen - mit besonders geringer 1-IF Leistung auskommenden - Messverfahren mit nachschwingendem Messwertgeber mit hoher Effizienz und erlaubt dank des Verzichts auf leistungsfressende Analog-Digital-Wandler im funkfeldgespeisten Transponder die Abfrage auch aus einer großen Entfernung unter widrigen Umständen.

### Bezugszeichenliste

- D1, D2: Zweiwegegleichrichter
- HF: Hochfrequenzsignal
- IDD1: digitaler Schaltungsteil
- XT1: Temperaturmessquarz
- L1: Induktivitäten
- V-: erster Ausgang
- V+: zweiter Ausgang
- V1: Schaltelement

## Patentansprüche

1. Transponder mit mindestens einem Zweiwegegleichrichter (D1, D2) zur Energieversorgung des Transponders aus einem empfangenen Hochfrequenzsignal (HF) sowie zur Demodulation des Hochfrequenzsignals (HF), der Zweiwegegleichrichter (D1, D2) bestehend aus
- zwei Strompfaden unterschiedlicher Stromrichtung mit einem Ausgang (V+, V-) je Strompfad,
- der Transponder verfügend weiterhin über einen digitalen Schaltungsteil (IDD1) mit digitaler Elektronik zum Auswerten eines empfangenen Codes,
- zudem verfügend über einen Schaltungsteil zum Betrieb eines nachschwingenden Resonators oder Quarzes oder Temperatur-Messquarzes (XT1) zur analogen Bestimmung und Übermittlung mindestens eines Messwerts,
**dadurch gekennzeichnet, dass**
- ein erster Ausgang (V-) des Zweiwegegleichrichters (D1, D2) mit einer Induktivität (L1) gleichspannungsmäßig nach Masse abgeschlossen ist,
- ein zweiter Ausgang (V+) des Zweiwegegleichrichters (D1 , D2) - aus dem Strompfad mit zum Strompfad des ersten Ausgangs entgegengesetzter Stromrichtung - mit einem Schaltelement (V1) gleichspannungsmäßig nach Masse abgeschlossen ist,
- der mit der Induktivität (L1) abgeschlossene erste Ausgang (V-) den Schaltungsteil zum Betrieb des nachschwingenden Resonator oder Quarz oder Temperatur-Messquarz versorgt,
- der mit dem Schaltelement (V1) abgeschlossene zweite Ausgang (V+) den digitalen Schaltungsteil (IDD1) versorgt.

2. Transponder nach Anspruch 1,
**dadurch gekennzeichnet, dass**
der digitale Schaltungsteil (IDD1) beim Erkennen eines dem Transponder zugeordneten Codes das Schaltelement (V1) betätigt.

3. Transponder nach Anspruch 1 oder 2,
**dadurch gekennzeichnet, dass**
eine erhöhte Betriebsspannung für den digitalen Schaltungsteil (IDD1) durch Speisung mit einem amplituden- oder pulsmodulierten Hochfrequenzsignal bereitgestellt wird, indem während des Empfangs einer hohen Amplitude Energie in der Induktivität (L1) gespeichert wird, welche bei Reduktion der Amplitude rückwärts durch den Zweiwegegleichrichter (D1, D2) fließt und an einem anderen Ausgang eine Spannungserhöhung bewirkt.

4. Transponder nach einem der Ansprüche 1 bis 3,
**dadurch gekennzeichnet, dass**
eine erhöhte Ausgangsspannung des Zweiwegegleichrichters (D1, D2) durch Vorschalten eines Kondensators (Cl) vor den Zweiwegegleichrichter (D1, D2) zur Spannungsverdopplung oder durch Nutzung einer zusätzlichen Gleichrichterkaskade mit weiteren Kondensatoren und Dioden zur Spannungsvervielfachung bereitgestellt wird.

5. Transponder nach einem der Ansprüche 1 bis 4,
**dadurch gekennzeichnet, dass**
eine erhöhte Ausgangsspannung des Zweiwegegleichrichters (D1, D2) durch eine Impedanzanpassung (L2, C4) vor dem Zweiwegegleichrichter (D1, D2) bewirkt wird.

6. Transponder nach einem der Ansprüche 1 bis 5,
**dadurch gekennzeichnet, dass**
eine Backscatter-Modulation der Hochfrequenzsignals bewirkt wird, indem eine Diode (D2) oder ein nichtlineares Element im Zweiwegegleichrichter (D1, D2) zusätzlich als passiver Mischer genutzt wird.

7. Transponder nach einem der Ansprüche 1 bis 6,
**dadurch gekennzeichnet, dass**
im Zweiwegegleichrichter (D1, D2) Zero-Bias-Dioden oder FET-Transistoren als Gleichrichterdioden verwendet werden.

8. Transponder nach einem der Ansprüche 1 bis 7,
**dadurch gekennzeichnet, dass**
als Schaltelement mindestens ein MOSFET (V1) Verwendung findet, welcher zusätzlich durch Beschaltung mit mindestens einem passiven Zeitglied auch dann noch für eine bestimmte Zeit geschlossen sein kann, wenn die Versorgung der digitalen Elektronik durch Ansteuern eben dieses MOSFET zugunsten des Ausgangs zur Versorgung des Schaltungsteils zur analogen Bestimmung und Übermittlung eines Messwerts eingestellt wurde.

9. Transponder nach einem der Ansprüche 1 bis 8,
**dadurch gekennzeichnet, dass**
die Induktivität (L1), welche den ersten Ausgang (V-) des Zweiwegegleichrichters (D1, D2) nach Masse abschließt, zusammen mit einem Glättungskondensator(C3) einen Schwingkreis bildet, welcher bei geschlossenem Schaltelement (V1) und bei Vorliegen einer Amplitudenmodulation des Hochfrequenzsignals (HF) nahe der Resonanzfrequenz dieses Schwingkreises eine Wechselspannung zur Anregung des Resonators oder Quarzes oder Temperatur-Messquarzes (XTI) mit erhöhter Amplitude bereitstellt.

10. Monolithischer integrierter Schaltkreis für einen Transponder nach einem der Ansprüche 1 bis 9,
**dadurch gekennzeichnet, dass**
der Zweiwegegleichrichter (D1, D2), das Schaltelement (V1) und der digitale Schaltungsteil (IDD1) zur Auswertung des empfangenen Codes im Hochfrequenzsignal (HF) zusammen integriert werden.

## Claims

1. A transponder with at least one two way rectifier (D1, D2) for supplying the transponder with energy from a received high frequency signal (HF) and for demodulating the high frequency signal (HF), the two way rectifier (D1, D2) comprising:
- two current paths with different current directions including one output (V+, V-) per current path,
- the transponder further comprising a digital circuit portion (IDD1) with digital electronics for evaluating a received code,
- further comprising a circuit portion for operating a post pulse resonator or quartz or temperature measuring quartz (XT1) for analog determination and transmission of at least one measurement valve,
**characterized in that**,
- a first output (V-) of the two way rectifier (D1, D2) is DC voltage connected with ground through an inductivity (L1),
- a second output (V+) of the two way rectifier (D1, D2) from the current path that has a current direction that is opposite to the current direction of the current path of the first output is DC voltage connected to ground through a circuit element (V1),
- the first output (V-) that is terminated by the inductivity (L1) supplies the circuit portion to operate the post pulse oscillating resonator or the quartz or the temperature measurement quartz,
- the second output (V+) that is terminated by the circuit element (V1) supplies the digital circuit portion (IDD1).

2. The transponder according to claim 1,
**characterized in that**,
the digital circuit portion (IDD1) actuates the switching element (V1) when a code that is associated with the transponder is detected.

3. The transponder according to claim 1 or 2,
**characterized in that**
an increased operating voltage for the digital circuit portion (IDD1) is provided by feeding with an amplitude or pulse modulated high frequency signal **in that** energy is stored in the inductivity (L1) during reception of a high amplitude wherein the energy flows backward through the two way rectifier (D1, D2) when reducing the amplitude and causes a voltage increase at another output.

4. The transponder according to one of the claims 1 - 3,
**characterized in that**
an increased output voltage of the two way rectifier (D1, D2) is provided by connecting a capacitor (CI) in front of the two way rectifier (D1, D2) for voltage doubling or by using an additional rectifier cascade with additional capacitors or diodes in order to provide voltage multiplication.

5. The transponder according to one of the claims 1- 4,
**characterized in that**
an increased output voltage of the two way rectifier (D1, D2) is caused by an impedance adaptation (L2, C4) in front of the two way rectifier (D1, D2).

6. The transponder according to one of the claims 1-5,
**characterized in that**
a back scatter modulation of the high frequency signal is caused by using a diode (D2) or a non-linear element in the two way rectifier (D1, D2) as an additional passive mixer.

7. The transponder according to one of the claims 1 - 6,
**characterized in that**
the two way rectifier (D1, D2) includes zero bias diodes or FET transistors as rectifier diodes.

8. The transponder according to one of the claims 1 - 7,
**characterized in that**
at least one MOSFET (V1) is used as a switching element wherein the at least one MOSFET can be closed for a predetermined time period by additionally connecting it with at least one passive time component when the supply of the digital electronics through controlling the MOSFET is discontinued in favor of supplying the circuit portion for analog determination and transmission of a measurement value.

9. The transponder according to one of the claims 1 - 8,
**characterized in that**
the inductivity (L1) which connects the first output (V-) of the two way rectifier (D1, D2) to ground forms a resonance circuit together with a smoothing capacitor (C3) wherein the resonance circuit provides an alternating current to excite the resonator or the quartz or the temperature measurement quartz (XTI) with increased amplitude when the switching element (V1) is closed and when an amplitude modulation of the high frequency signal (HF) is provided proximal to the resonance frequency of the resonance circuit.

10. A monolithic integrated circuit for a transponder according to one of the claims 1 through 9,
**characterized in that**
the two way rectifier (D1, D2), the circuit element (V1) and the digital circuit portion (IDD1) are integrated in order to process the received code in the high frequency (HF) signal.

## Revendications

1. Transpondeur avec au moins un redresseur bidirectionnel (D1, D2) pour l'alimentation en énergie du transpondeur à partir d'un signal à haute fréquence (HF) reçu et pour la démodulation du signal à haute fréquence (HF), le redresseur bidirectionnel (D1, D2) comprenant :
- deux chemins de courant de sens de courant différent avec une sortie (V+, V-) par chemin de courant,
- le transpondeur comprenant en outre une partie de circuit numérique (IDD1) avec une électronique numérique pour évaluer un code reçu,
- comprenant en outre une partie de circuit pour opérer un résonateur ou un quartz ou un quartz de mesure de température (XT1) qui résonne pour la détermination et la transmission analogique d'au moins une valeur mesurée,
**caractérisé en ce que**
- une première sortie (V-) du redresseur bidirectionnel (D1, D2) est terminée à la terre par une inductance (L1) en termes de tension continue,
- une deuxième sortie (V+) du redresseur bidirectionnel (D1, D2) - provenant du chemin de courant avec un sens de courant opposé au chemin de courant de la première sortie - est terminée à la terre par un élément de circuit (V1) en termes de tension continue,
- la première sortie (V-) terminée par l'inductance (L1) alimente la partie de circuit permettant de faire fonctionner le résonateur ou le quartz ou le quartz de mesure de température qui résonne,
- la deuxième sortie (V+) terminée par l'élément de circuit (V1) alimente la partie de circuit numérique (IDD1).

2. Transpondeur selon la revendication 1,
**caractérisé en ce que**
la partie de circuit numérique (IDD1) actionne l'élément de circuit (V1) lorsqu'un code attribué au transpondeur est reconnu.

3. Transpondeur selon la revendication 1 ou 2,
**caractérisé en ce que**
une tension de fonctionnement accrue pour la partie de circuit numérique (IDD1) est fournie en alimentant un signal à haute fréquence modulé en amplitude ou en impulsions par stockage d'énergie dans l'inductance (L1) pendant la réception d'une amplitude élevée, cette énergie reflue dans le redresseur bidirectionnel (D1, D2) lorsque l'amplitude est réduite et provoque une augmentation de tension sur une autre sortie.

4. Transpondeur selon l'une des revendications 1 à 3,
**caractérisé en ce que**
une tension de sortie accrue du redresseur bidirectionnel (D1, D2) est fournie en connectant un condensateur (CI) en amont du redresseur bidirectionnel (D1, D2) pour le doublement de la tension ou en utilisant une cascade de redresseurs supplémentaires avec d'autres condensateurs et diodes pour la multiplication de la tension.

5. Transpondeur selon l'une des revendications 1 à 4,
**caractérisé en ce que**
une tension de sortie accrue du redresseur bidirectionnel (D1, D2) est réalisée par une adaptation d'impédance (L2, C4) en amont du redresseur bidirectionnel (D1, D2).

6. Transpondeur selon l'une des revendications 1 à 5,
**caractérisé en ce que**
une modulation de rétrodiffusion (backscatter) du signal à haute fréquence est provoquée en utilisant en plus une diode (D2) ou un élément non linéaire dans le redresseur bidirectionnel (D1, D2) comme mélangeur passif.

7. Transpondeurs selon l'une des revendications 1 à 6,
**caractérisés en ce que**
des diodes à polarisation nulle ou des transistors FET sont utilisés comme diodes de redressement dans le redresseur bidirectionnel (D1, D2).

8. Transpondeur selon l'une des revendications 1 à 7,
**caractérisé en ce que**
on utilise comme élément de circuit au moins un MOSFET (V1) qui peut en outre être fermé pendant un certain temps par câblage avec au moins un élément de temporisation passif même si l'alimentation de l'électronique numérique a été réglée en commandant précisément ce MOSFET en faveur de la sortie pour l'alimentation de la partie de circuit pour la détermination et la transmission analogique d'une valeur mesurée.

9. Transpondeur selon l'une des revendications 1 à 8,
**caractérisé en ce que**
l'inductance (L1) qui termine à la terre la première sortie (V-) du redresseur bidirectionnel (D1, D2) forme un circuit résonnant avec un condensateur de lissage (C3), qui, lorsque l'élément de circuit (V1) est fermé et lorsqu'il y a une modulation d'amplitude du signal à haute fréquence (HF) proche de la fréquence de résonance de ce circuit résonant, fournit une tension alternative pour exciter le résonateur ou le quartz ou le quartz de mesure de température (XTI) avec une amplitude accrue.

10. Circuit intégré monolithique pour un transpondeur selon l'une des revendications 1 à 9,
**caractérisé en ce que**
le redresseur bidirectionnel (D1, D2), l'élément de circuit (V1) et la partie de circuit numérique (IDD1) sont intégrés ensemble dans le signal à haute fréquence (HF) pour l'évaluation du code reçu.
